# EUROPÄISCHE PATENTSCHRIFT

(11) **EP 0 601 262 B1**
(45) Veröffentlichungstag und Bekanntmachung des Hinweises auf die Patenterteilung: **19.11.1997**
(21) Anmeldenummer: 92810980.0
(22) Anmeldetag: 10.12.1992
(51) Int. Cl.: F22B 37/20, F16L 51/04

(54) **Rohrleitung, die Differenzdehnungen unterliegt**
Pipe subjected to differential dilatations
Conduit soumis à des dilatations différentielles

(43) Veröffentlichungstag der Anmeldung: 15.06.1994
(73) Patentinhaber: ASEA BROWN BOVERI AG, 5400 Baden (CH)
(72) Erfinder: Fässler, Peter, CH-8370 Sirnach (CH)

(56) Entgegenhaltungen:
- DE-A- 2 313 759
- DE-C- 145 021
- DE-C- 438 654
- DE-C- 900 763
- FR-A- 2 415 773
- US-A- 2 697 420
- US-A- 3 116 045

## Beschreibung

Die Erfindung betrifft eine Anordnung einer mit unter Druck stehendem Arbeitsmittel gefüllten Rohrleitung, die im Betrieb Differenzdehnungen unterliegt. Solche Leitungen dienen beispielsweise als Entwässerungsleitungen in Dampferzeugeranlagen. Aber auch als Messleitungen können die eingangs genannten Rohrleitungen dienen.

Aus DE-C-438654 ist eine Rohrleitung bekannt, welche Schlaufen aufweist, die mittels Flansche zum Einbau in eine geradlinig fortlaufende Leitung bestimmt sind. Diese Schlaufen sind S-förmig und symmetrisch zu dem auf der Mittellinie der Leitung liegenden Mittelpunkt der Verbindungslinie der Endflanschmitten ausgeführt, d.h. sie bestehen aus zwei in Serie geschalteten Lyrabögen. Die Schlaufe dient der Aufnahme von Dehnungen in der Längsachse der Rohre, wobei nur kleine seitliche Kräfte entstehen sollen, die die Flansche quer zur Längsachse der Rohre verdrehen. Eine Winkelbewegung zwischen den Längsachsen der beiden Leitungsstücke soll somit verhindert werden.

Damit die Entwässerungsleitung eines Dampferzeugers Differenzdehnungen ausgleichen kann, war es bisher üblich, im Verlauf der Rohrleitung von einem vertikalen Abschnitt in einen etwa horizontalen Abschnitt oder Schenkel überzugehen, an den sich dann ein weiterer etwa vertikaler Leitungsabschnitt anschliesst. Die Länge eines horizontalen Schenkels kann 10 bis 15 m betragen. Bei solchen Schenkellängen muss der Schenkel an Fixpunkten aufgehängt werden, was mittels mehrerer, über die Schenkellänge verteilter Konstanthänger und Federhänger geschieht. Die Fixpunkte werden im Falle eines Dampferzeugers vom Kesselgerüst gebildet. Konstanthänger werden in dem Bereich des Schenkels angeordnet, in dem der Schenkel grosse Dehnbewegungen ausführen muss, wogegen Federhänger in dem Bereich des Schenkels angebracht werden, in dem kleine Schenkelbewegungen stattfinden.

Bei dieser bekannten Rohrleitungsanordnung ist nachteilig, dass die Rohrleitung wegen des langen Schenkels relativ viel Platz beansprucht und dass zum Aufhängen des Schenkels Konstanthänger und Federhänger notwendig sind, deren Aufbau kompliziert ist und für deren Anordnung ebenfalls ein entsprechender Platz erforderlich ist.

Der Erfindung liegt die Aufgabe zugrunde, die eingangs genannte Rohrleitungsanordnung dahingehend zu verbessern, dass sie konstruktiv einfacher ist und der Platzbedarf verringert wird.

Diese Aufgabe wird erfindungsgemäss durch eine Anordnung mit den Merkmalen des Anspruchs 1 gelöst.

Durch die Schlaufenbildung in der erfindungsgemässen Rohrleitungsanordnung erhält die Rohrleitung eine ausreichende Elastizität zur Aufnahme von Bewegungen, die durch im Betrieb auftretende Differenzdehnungen der Leitung bedingt sind. Durch die gelenkige Laschenverbindung der Rohrleitungsabschnitte im Schlaufenbereich wird auf konstruktiv einfache Weise die Kraftübertragung bewerkstelligt. Da die Schlaufenabschnitte gegenüber den geradlinigen Leitungsabschnitten nicht so weit auskragen wie der lange Schenkel in der bekannten Entwässerungsleitung, ist für die erfindungsgemässe Rohranordnung der Platzbedarf wesentlich kleiner. Der Platzbedarf wird ausserdem dadurch verringert, dass wegen der gelenkigen Laschenverbindung Konstanthänger und Federhänger entfallen. Ueberdies ist die konstruktive Gestaltung der Laschenverbindung wesentlich einfacher als die Konstruktion von Konstanthängern und Federhängern.

Einige Ausführungsbeispiele der Erfindung sind in der folgenden Beschreibung anhand der Zeichnung näher erläutert. Es zeigen:
- Fig.1: ein Schaltbild eines Zwanglaufdampferzeugers, an dem die erfindungsgemässe Rohrleitungsanordnung an verschiedenen Stellen angewendet wird,
- Fig.3: in perspektivischer Darstellung einen Teil einer erfindungsgemässen Rohrleitung, die als Messleitung dient,
- Fig.4: in perspektivischer Darstellung einen Teil einer erfindungsgemässen Rohrleitung, die als Entwässerungsleitung dient, und

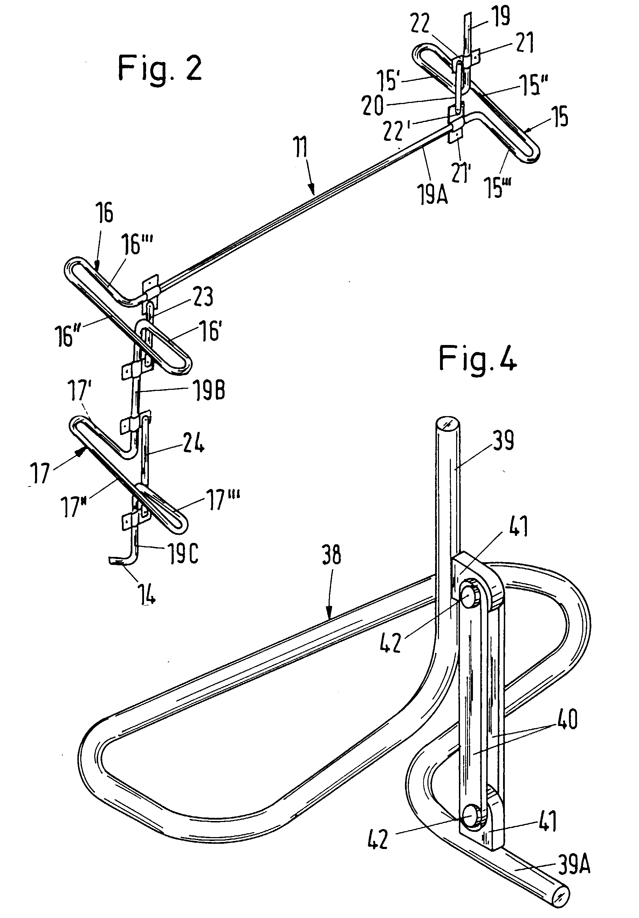

- Fig.4: in perspektivischer Darstellung einen Ausschnitt aus der Rohrleitung in Fig.2, jedoch in grösserem Massstab.

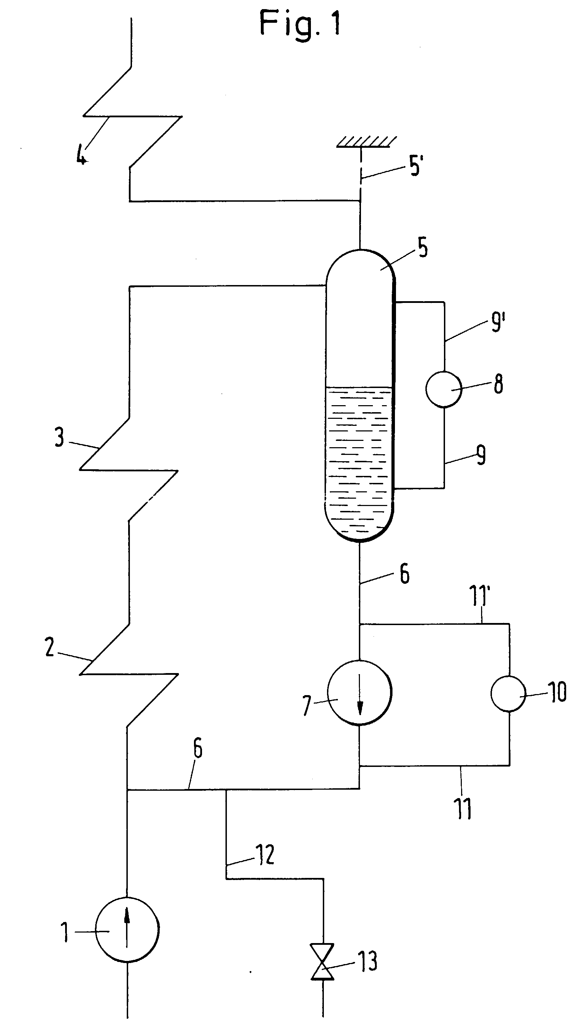

Gemäss Fig.1 weist der Zwanglaufdampferzeuger eine Speisepumpe 1 sowie als Heizflächen einen Economiser 2, einen Verdampfer 3 und einen Ueberhitzer 4 auf. Die Heizflächen 2 bis 4 sind im Arbeitsmittelstrom in Reihe geschaltet. In den Arbeitsmittelstrom ist zwischen dem Verdampfer 3 und dem Ueberhitzer 4 eine Abscheideflasche 5 geschaltet, in der eine Trennung des aus dem Verdampfer 3 kommenden Arbeitsmittels in eine dampfförmige und eine flüssige Phase stattfindet. Die flüssige Phase sammelt sich im unteren Teil der Abscheideflasche 5. Am unteren Ende der Abscheideflasche 5 ist eine Umwälzleitung 6 angeschlossen, die eine Umwälzpumpe 7 enthält und die zwischen der Speisepumpe 1 und dem Economiser 2 in den Arbeitsmittelstrom mündet. An der Abscheideflasche 5, deren Abmessung in vertikaler Richtung 10 bis 20 m betragen kann, ist ein Niveaumessfühler 8 in Form eines Druckdifferenzmessgerätes angeschlossen, und zwar über je eine Messleitung 9 und 9', die im Bereich des unteren bzw. des oberen Endes der Abscheideflasche 5 in diese münden. Mit Hilfe einer Zugstange 5' ist die Abscheideflasche an einem nicht dargestellten Kesselgerüst aufgehängt.

Im Betrieb der Umwälzpumpe 7 muss die von ihr erzeugte Druckdifferenz überwacht werden, wozu ein Druckdifferenzmessgerät 10 vorgesehen ist. Das Druckdifferenzmessgerät 10 ist über je eine Messleitung 11 und 11' mit der Umwälzleitung 6 auf der Druckseite bzw. der Saugseite der Umwälzpumpe 7 verbunden. An der Umwälzleitung 6 stromunterhalb der Umwälzpumpe 7 ist eine Entwässerungsleitung 12 mit einem Ablassventil 13 angeschlossen. Das System - bestehend aus der Abscheideflasche 5, der Umwälzleitung 6 und der Umwälzpumpe 7 - wird im Betrieb des Dampferzeugers heiss. Dabei bewegt sich die Umwälzpumpe 7 in vertikaler Richtung nach unten. Diese Bewegung kann zwischen kaltem Zustand und Betriebszustand 500 mm betragen. Das Druckdifferenzmessgerät 10 ist ebenfalls am Kesselgerüst befestigt, so dass die Messleitungen 11 und 11' die Bewegungsdifferenz zwischen der Umwälzpumpe 7 und dem Druckdifferenzmessgerät 10 ausgleichen müssen. Die relativ langen und dünnen Messleitungen 9 und 9' sowie 11 und 11' und die Entwässerungsleitung 12 enthalten Arbeitsmittel, das unter einem Druck von beispielsweise 250 bar steht.

In Fig.2 ist ein Teil der Messleitung 11 des Druckdifferenzmessgerätes 10 dargestellt. Das in Fig.2 obere Ende der Rohrleitung 11 ist mit dem Messgerät 10 verbunden, wogegen das in Fig.2 untere Ende über einen Krümmer 14 in die nicht dargestellte Umwälzleitung 6 stromunterhalb der Umwälzpumpe 7 mündet. Gemäss Fig.2 sind in der Rohrleitung 11 drei Schlaufen 15, 16 und 17 enthalten, durch die die Rohrleitung Dehnungsmöglichkeiten erhält. Die Schlaufe 15 besteht im wesentlichen aus drei Schlaufenabschnitten 15', 15'' und 15'''. Der erste Schlaufenabschnitt 15' schliesst an den in Fig.2 oberen, vertikalen Leitungsabschnitt 19 der Rohrleitung 11 an und erstreckt sich quer zu diesem. Der erste Schlaufenabschnitt 15' geht dann über einen 180°-Rohrbogen in den zweiten Schlaufenabschnitt 15'' über, der sich in entgegengesetzter Richtung zum ersten Schlaufenabschnitt 15' erstreckt und dabei den Leitungsabschnitt 19 kreuzt. Am Ende des zweiten Schlaufenabschnitts 15'' geht dieser über einen 180°-Rohrbogen in den dritten Schlaufenabschnitt 15''' über, der sich dann in den Bereich des Leitungsabschnitts 19 erstreckt, in diesem Bereich dann aber in einen geradlinigen zweiten Leitungsabschnitt 19A der Rohrleitung 11 einmündet. Der zweite Leitungsabschnitt 19A bildet mit dem ersten Leitungsabschnitt 19 ungefähr einen rechten Winkel, d.h. er erstreckt sich ungefähr horizontal gegen die Umwälzleitung 6. Die beiden Leitungsabschnitte 19 und 19A sind über eine Lasche 20 gelenkig miteinander verbunden, wobei die Lasche in der Ebene schwenkbar ist, die durch die Leitungsabschnitte 19 und 19A definiert ist. Die gelenkige Befestigung der Lasche 20 an den Leitungsabschnitten 19 und 19A geschieht mit Hilfe von je einer auf dem Leitungsabschnitt festgeklemmten Bride 21 bzw. 21' und einem Bolzen 22 bzw. 22', der durch die Bride und das zugehörige Laschenende gesteckt ist. Die Bolzenachse bildet zugleich die Gelenkachse.

Die aus drei Schlaufenabschnitten 16', 16'' und 16''' bestehende Schlaufe 16 am in Fig.2 linken Ende des Leitungsabschnitts 19A ist praktisch gleich ausgebildet wie die Schlaufe 15, wobei der für die Schlaufe 16 erste Leitungsabschnitt 19B von der Schlaufe 16 aus sich nach unten fortsetzt, d.h. im wesentlichen parallel zum Leitungsabschnitt 19 an der Schlaufe 15. Auch die die Schlaufe 16 überbrückende Lasche 23 ist entsprechend der Lasche 20 an den Leitungsabschnitten 19A und 19B gelenkig befestigt.

Die Schlaufe 17 besteht ebenfalls aus drei Schlaufenabschnitten 17', 17'' und 17''', die gleich geführt sind wie die entsprechenden Schlaufenabschnitte der beiden anderen Schlaufen. Abweichend ist bei der Schlaufe 17 jedoch, dass der mit dem dritten Schlaufenabschnitt 17''' verbundene Leitungsabschnitt 19C ebenfalls vertikal verläuft wie der Leitungsabschnitt 19B, d.h. dass die beiden Abschnitte 19B und 19C miteinander fluchten. Die Leitungsabschnitte 19B und 19C sind über eine die Schlaufe 17 überbrückende Lasche 24 miteinander gelenkig verbunden.

Durch die in die Rohrleitung 11 eingebogenen Schlaufen 15, 16 und 17 und die zugehörigen Laschen 20 bzw. 23 bzw. 24 sind Dehnbewegungsmöglichkeiten für die verschiedenen Leitungsabschnitte der Rohrleitung 11 geschaffen worden, indem die Leitungsabschnitte in Richtung der Schwenkbewegungen der Laschen relativ zueinander ausweichen können. Die Messleitung 11' ist in gleicher Weise ausgebildet wie die Leitung 11. Die Länge der Schlaufenabschnitte 15'', 16'' und 17'' beträgt jeweils 1,5 bis 2 m, während die Länge des Leitungsabschnitts 19A ungefähr 3 m beträgt. Die Rohrleitung 11 ist - bezogen auf ihre Länge - dünn; der Rohraussendurchmesser ist beispielsweise 76 mm.

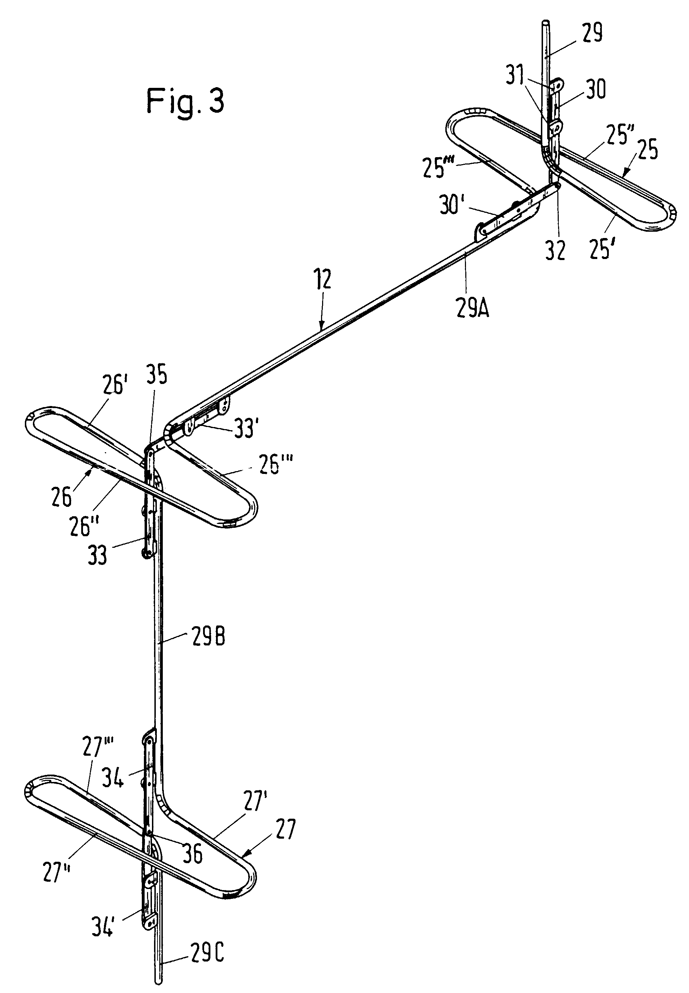

Gemäss Fig.3 ist die Entwässerungsleitung 12 mit drei Schlaufen 25, 26 und 27 versehen, die zwischen der in Fig.3 oben liegenden, jedoch nicht dargestellten Umwälzleitung 6 (Fig.1) und dem in Fig.3 unten liegenden, ebenfalls nicht dargestellten Ablassventil 13 (Fig.1) angeordnet sind. Aehnlich wie bei der Schlaufe 15 in Fig.2 sind in der Schlaufe 25 der Entwässerungsleitung 12 drei Schlaufenabschnitte 25', 25'' und 25''' vorgesehen, von denen der erste Schlaufenabschnitt 25' mit einem vertikalen Leitungsabschnitt 29 der Leitung 12 und der dritte Schlaufenabschnitt 25''' mit einem horizontalen Leitungsabschnitt 29A der Leitung 12 verbunden ist. Analog sind auch die Schlaufen 26 und 27 prinzipiell gleich ausgebildet wie die Schlaufen 16 und 17 in Fig.2. Abweichend ist hingegen, dass beim Ausführungsbeispiel nach Fig.3 jeweils zwei Laschen eine Schlaufe überbrücken. So ist bei der Schlaufe 25 in Fig.3 am Leitungsabschnitt 29 eine Lasche 30 vorgesehen, die mittels zweier am Leitungsabschnitt 29 angeschweisster Lappen 31 an diesem Abschnitt befestigt ist, indem durch die Lasche 30 und die beiden Lappen 31 je ein Bolzen gesteckt ist. In gleicher Weise ist am Leitungsabschnitt 29A eine Lasche 30' befestigt. Die beiden Laschen 30 und 30' ragen mit ihrem freien Ende in die Schlaufe 25 und sind dort über einen durchgesteckten Bolzen 32 miteinander verbunden, der die Gelenkstelle bildet. In gleicher Weise sind im Bereich der Schlaufe 26 zwei Laschen 33 und 33' vorgesehen, die mit dem Leitungsabschnitt 29B bzw. 29A fest verbunden sind und die innerhalb der Schlaufe 26 die Gelenkverbindung mittels eines Bolzens 35 aufweisen. Im Bereich der Schlaufe 27 sind zwei Laschen 34 und 34' vorhanden, die hier wegen der miteinander fluchtenden Leitungsabschnitte 29B und 29C einen gestreckten Winkel von 180° bilden, dessen Scheitelpunkt von einem Bolzen 36 gebildet wird, der auch das Gelenk bildet. Die für die Rohrleitung 11 angegebenen Abmessungen gelten prinzipiell auch für die Rohrleitung 12.

Wie zu Fig.2 beschrieben ermöglichen auch beim Ausführungsbeispiel nach Fig.3 die Schlaufen 25 bis 27 mit den darin befindlichen Gelenkverbindungen der Laschen grosse Dehnbewegungen der Leitungsabschnitte 29 bis 29C.

In Fig.4 ist eine der Schlaufe 15 in Fig.2 entsprechend ausgebildete Schlaufe 38 gezeigt, bei der jedoch zur Verbindung der Leitungsabschnitte 39 und 39A statt einer Lasche ein Laschenpaar 40 vorgesehen ist und anstelle von Briden Lappen 41 an den Leitungsabschnitten 39 und 39A angeschweisst sind. Je ein durch das Laschenpaar 40 und den Lappen 41 gesteckter Bolzen 42 bildet ein Gelenk.

Auch die Messleitungen 9 und 9' an der Abscheideflasche 5 sind mit Schlaufen und Laschenverbindungen der beschriebenen Art versehen.

## Patentansprüche

1. Anordnung einer mit unter Druck stehendem Arbeitsmittel gefüllten Rohrleitung (11, 12), die im Betrieb Differenzdehnungen unterliegt, wobei im Verlauf der Rohrleitung (11, 12) mindestens eine Schlaufe (15, 25) gebildet ist, die - ausgehend von einem ersten geraden Leitungsabschnitt (19, 29) der Rohrleitung (11, 12) - mit einem ersten Schlaufenabschnitt (15', 25') sich quer zum ersten Leitungsabschnitt (19, 29) erstreckt, mit einem an den ersten Schlaufenabschnitt (15', 25') anschliessenden zweiten Schlaufenabschnitt (15'', 25'') eine gedachte Verlängerung des ersten Leitungsabschnittes (19, 29) kreuzt und einen an den zweiten Schlaufenabschnitt (15'', 25'') anschliessenden dritten Schlaufenabschnitt (15''',25''') aufweist, an den sich ein zweiter gerader Leitungsabschnitt (19A, 29A) anschliesst, dadurch gekennzeichnet, dass die Schlaufe (15, 25) mit dem dritten Schlaufenabschnitt (15''',25''') in die Nähe des Ausgangspunktes des ersten Schlaufenabschnittes (15', 25') zurückkehrt und dass die beiden geraden Leitungsabschnitte (19 und 19A, 29 und 29A) über mindestens eine Lasche (20, 30) zur Kraftübertragung gelenkig miteinander verbunden sind.

2. Anordnung nach Anspruch 1, dadurch gekennzeichnet, dass zur gelenkigen Verbindung zwei Laschen (30, 30') vorgesehen sind, von denen eine am ersten geraden Leitungsabschnitt (29) und die andere am zweiten geraden Leitungsabschnitt (29A) starr befestigt und die gegeneinander gerichteten Enden der beiden Laschen (30, 30') gelenkig verbunden sind.

3. Anordnung nach Anspruch 1 oder 2, dadurch gekennzeichnet, dass die beiden geraden Leitungsabschnitte (19 und 19A, 29 und 29A) ungefähr einen rechten Winkel bilden.

4. Dampferzeuger mit einer Rohranordnung gemäss einem der Ansprüche 1 bis 3.

## Claims

1. Arrangement of a pipeline (11, 12) which is filled with operating medium under pressure and is subject to differential expansions in operation, at least one loop (15, 25) being formed in the course of the pipeline, which loop - starting from a first straight line section (19, 29) of the pipeline (11, 12) - extends with a first loop section (15', 25') transverse to the first line section (19, 29), crosses with a second loop section (15", 25") adjoining the first loop section (15', 25') an imaginary extension of the first line section (19, 29), and has a third loop section (15''', 25''') which adjoins the second loop section (15", 25") and is adjoined by a second straight line section (19A, 29A), characterized in that the loop (15, 25) returns with the third loop section (15''', 25''') into the vicinity of the starting point of the first loop section (15', 25'), and in that the two straight line sections (19 and 19A, 29 and 29A) are connected to each other in a hinged manner via at least one butt strap (20, 30) in order to transmit force.

2. Arrangement according to Claim 1, characterized in that two butt straps (30, 30') are provided for the hinged connection, one of which is rigidly fastened to the first straight line section (29) and the other is rigidly fastened to the second straight line section (29A), and those ends of the two butt straps (30, 30') which are directed towards each other are connected in a hinged manner.

3. Arrangement according to Claim 1 or 2, characterized in that the two straight line sections (19 and 19A, 29 and 29A) approximately form a right angle.

4. Steam generator having a pipe arrangement according to one of Claims 1 to 3.

## Revendications

1. Agencement d'une conduite (11, 12) remplie d'un fluide de travail se trouvant sous pression, qui est soumise en service à des dilatations différentielles, dans lequel, sur le parcours de la conduite (11, 12), est formée au moins une boucle (15, 25) qui - en partant d'un premier tronçon de conduite rectiligne (19, 29) de la conduite (11, 12) - s'étend avec un premier tronçon de boucle (15', 25') transversalement par rapport au premier tronçon de conduite (19, 29), croise, avec un deuxième tronçon de conduite (15", 25") se raccordant au premier tronçon de conduite (15', 25'), un prolongement imaginaire du premier tronçon de conduite (19, 29), et présente un troisième tronçon de boucle (15"', 25"') se raccordant au deuxième tronçon de boucle (15", 25"), auquel se raccorde un deuxième tronçon de conduite rectiligne (19A, 29A), caractérisé en ce que la boucle (15, 25) revient en arrière avec le troisième tronçon de boucle (15"', 25"') au voisinage du point de départ du premier tronçon de boucle (15', 25') et en ce que les deux tronçons de conduite rectilignes (19 et 19A, 29 et 29A) sont reliés l'un à l'autre de façon articulée par au moins une barrette (20, 30) pour la transmission des efforts.

2. Agencement suivant la revendication 1, caractérisé en ce qu'il est prévu, pour la liaison articulée, deux barrettes (30, 30'), dont l'une est fixée de façon rigide au premier tronçon de conduite rectiligne (29) et l'autre au deuxième tronçon de conduite rectiligne (29A) et les extrémités dirigées l'une vers l'autre des deux barrettes (30, 30') sont reliées de façon articulée.

3. Agencement suivant la revendication 1 ou 2, caractérisé en ce que les deux tronçons de conduite rectilignes (19 et 19A, 29 et 29A) forment environ un angle droit.

4. Générateur de vapeur avec un agencement de conduite suivant l'une des revendications 1 à 3.
